Europäisches Patentamt

European Patent Office

Office européen des brevets

(19)

(11) Numéro de publication : **0 332 517 B1**

(12) **FASCICULE DE BREVET EUROPEEN**

(45) Date de publication du fascicule du brevet :
**21.10.92 Bulletin 92/43**

(51) Int. Cl.$^5$ : **F16F 13/00**

(21) Numéro de dépôt : **89400606.3**

(22) Date de dépôt : **03.03.89**

(54) **Liaison élastique à rigidification hydraulique.**

(30) Priorité : **08.03.88 FR 8802955**

(43) Date de publication de la demande :
**13.09.89 Bulletin 89/37**

(45) Mention de la délivrance du brevet :
**21.10.92 Bulletin 92/43**

(84) Etats contractants désignés :
**DE GB IT**

(56) Documents cités :
**EP-A- 0 054 776
EP-A- 0 220 465
PATENT ABSTRACTS OF JAPAN, vol. 10, no.
96 (M-469)[2153], 12 avril 1986, page 6 M 469; &
JP-A-60 231 039 (BRIDGESTONEK.K.) 16-
11-1985**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Robic, Pascal
La Cheurtière
F-35580 Guignen (FR)**
Inventeur : **Le Fol, Marcel
12 Impasse du Verger Domloup
F-35410 Chateaugiron (FR)**

(74) Mandataire : **Kohn, Philippe et al
c/o CABINET LAVOIX 2, place d'Estienne
d'Orves
F-75441 Paris Cédex 09 (FR)**

## Description

La présente invention a pour objet une liaison élastique du type comportant un bloc en matériau élastomère auquel sont reliées deux armatures susceptibles de se déplacer l'une par rapport à l'autre – (voir par exemple EP-A-0220465).

Un tel type de liaison élastique est notamment utilisé pour le montage d'un train roulant, tel que l'essieu arrière, d'un véhicule automobile, par rapport à la caisse de ce dernier.

Dans ce type de montage il est courant d'utiliser deux liaisons élastiques situées symétriquement de part et d'autre de l'axe longitudinal du véhicule automobile. La liaison élastique ne doit pas posséder la même raideur élastique selon toutes les directions. Afin d'obtenir un bon filtrage des vibrations transmises par le train roulant à la caisse du véhicule, il est nécessaire que la liaison présente la raideur la plus faible possible dans le sens longitudinal. La raideur dans le sens vertical doit être compatible avec la charge de la caisse du véhicule que supporte la liaison.

Par contre la raideur la plus grande possible est nécessaire dans la direction transversale afin d'assurer le guide transversal du train roulant par rapport à la caisse du véhicule.

La présente invention a pour but de proposer une liaison élastique possédant un rapport de raideur transversale sur raideur verticale qui soit très élevé et notamment supérieur à 20.

Conformément à l'invention ce but est atteint au moyen d'une liaison élastique du type comportant un bloc en matériau élastomère, deux armatures planes et parallèles, susceptibles de se déplacer l'une par rapport à l'autre qui sont séparées axialement par le bloc en matériau élastomère dont chacune des faces opposées est adhérisée à l'armature en vis-à-vis, caractérisée en ce qu'elle comporte au moins une chambre fermée hermétiquement, remplie entièrement d'un liquide incompressible et qui est agencée entre deux portions de chacune des deux armatures qui sont repliées à 90° en direction de l'armature opposée de manière à augmenter la raideur élastique de la liaison selon une direction de déplacement relatif des armatures sensiblement perpendiculaire à un plan parallèlement auquel s'étendent les deux portions d'armature, la paroi latérale de ladite chambre étant déformable sous l'effet dudit déplacement relatif des armatures.

Grâce à cette caractéristique, une liaison élastique agencée par rapport à la caisse du véhicule de manière à ce que ladite direction de déplacement relatif soit la direction transversale du véhicule, permet d'accroître très fortement la raideur élastique de la liaison dans cette direction du fait de l'incompressibilité du liquide contenu dans la chambre étanche.

Selon d'autres caractéristiques de l'invention :
- la chambre est délimitée par une paroi latérale tubulaire en matériau élastomère dont chacune des faces d'extrémité annulaires opposées est reliée de manière étanche à la face de la portion d'armature en vis-à-vis ;
- la paroi tubulaire est une paroi sensiblement cylindrique dont la génératrice est parallèle à ladite direction de déplacement, et dont la courbe directrice peut être un rectangle ;
- la chambre peut également être délimitée par une paroi d'extrémité, venue de matière avec la paroi latérale, et adhérisée sur la face de la portion d'armature en vis-à-vis.

Ces caractéristiques permettent de réaliser très simplement la chambre étanche déformable, notamment par surmoulage de ses parois en matériau élastomère sur les portions d'armature métallique de la liaison, cette opération de surmoulage pouvant être effectuée simultanément avec l'opération de surmoulage du bloc en matériau élastomère auquel sont reliées les deux armatures.

Afin de permettre l'assemblage de la liaison, opération au cours de laquelle il faut assurer un remplissage complet de la chambre étanche, une des faces d'extrémité annulaires de la paroi latérale est adhérisée sur un cadre intermédiaire de liaison dont le contour correspond sensiblement à celui de ladite face d'extrémité annulaire et qui comporte des moyens de liaison étanche avec la portion d'armature en vis-à-vis.

Selon d'autres caractéristiques de l'invention :
- des moyens de liaison étanche sont constitués par un bord périphérique du cadre intermédiaire serti autour de la portion d'armature ;
- les moyens de liaison étanche comportent également un bourrelet interne d'étanchéité, venu de matière avec la paroi latérale au voisinage de sa face d'extrémité annulaire, et qui coopèrent avec le bord interne du cadre intermédiaire et la face en vis-à-vis de la portion d'armature.

Afin que la chambre étanche présente la meilleure résistance possible à l'accroissement de la pression, et donc que la raideur de la liaison soit maximale dans la direction de déplacement concernée, la paroi latérale présente, en section par un plan parallèle à ladite direction de déplacement, un profil en forme de voûte dont la convexité est tournée vers l'intérieur de la chambre.

Le guidage transversal d'un train roulant de véhicule automobile nécessite de disposer symétriquement et de manière opposée deux liaisons conformes aux enseignements de la présente invention.

Toutefois, afin d'améliorer encore le maintien transversal du train roulant, chaque liaison peut comporter une seconde chambre étanche déformable remplie d'un liquide et agencée entre deux autres portions de chacune des armatures qui s'étendent parallèlement à un plan perpendiculaire à ladite direction de déplacement relatif des armatures.

Selon une première variante les deux portions parallèles d'une des deux armatures s'étendent entre les deux portions parallèles de l'autre des deux armatures de manière à augmenter la rigidité axiale de la liaison selon ladite direction de déplacement relatif dans les deux sens de déplacement.

Enfin selon une autre variante les deux portions parallèles d'une des deux armatures peuvent être agencées de manière alternée par rapport aux deux portions parallèles de l'autre des deux armatures de manière à augmenter la rigidité axiale de la liaison à deux chambres selon ladite direction de déplacement relatif dans un sens de déplacement.

D'autres caractéristiques et avantages de l'invention apparaîtront à la lecture de la description détaillée qui va suivre pour la compréhension de laquelle on se reportera aux dessins annexés dans lesquels :

- la figure 1 est une vue latérale schématique illustrant le principe général de montage d'un train arrière par rapport à la caisse d'un véhicule automobile ;
- la figure 2 est une vue selon la flèche A de la figure 1 ;
- la figure 3 est une vue en coupe selon la ligne 3-3 de la figure 4, d'une liaison élastique réalisée conformément aux enseignements de l'invention ;
- la figure 4 est une demi-vue de dessus et une demi-vue en coupe selon la ligne 4-4 de la figure 3 ;
- la figure 5 est une demi-vue latérale de droite et d'une demi-vue en coupe selon ligne 5-5 de la figure 3;
- la figure 6 est une vue en coupe, similaire à celle de la figure 3, d'un second mode de réalisation d'une liaison élastique ; et
- la figure 7 est une vue similaire à celle de la figure 6 d'un troisième mode de réalisation d'une liaison élastique conforme aux enseignements de l'invention.

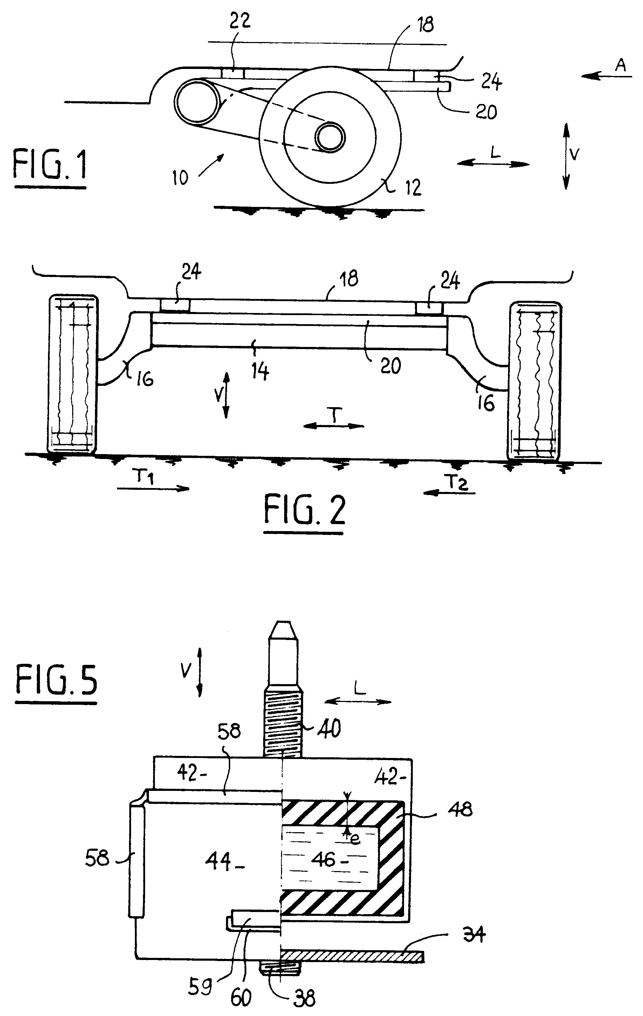

On a représenté aux figures 1 et 2, un train roulant arrière 10 de véhicule automobile comportant notamment des roues 12 reliées à une poutre centrale 14 par des bras latéraux 16. La poutre 14 est reliée à la caisse 18 par une traverse de train arrière 20 avec interposition de deux articulations élastiques 22 et deux liaisons élastiques 24.

Chaque liaison élastique 24 est soumise à des efforts selon trois directions principales, c'est-à-dire selon la direction verticale V, la direction longitudinale L et la direction transversale T.

Les efforts appliqués selon la direction transversale T correspondent à un déplacement relatif du train roulant 10 par rapport à la caisse 18 du véhicule selon une direction sensiblement parallèle à la direction T, ce déplacement pouvant s'effectuer selon deux sens opposés T1 et T2.

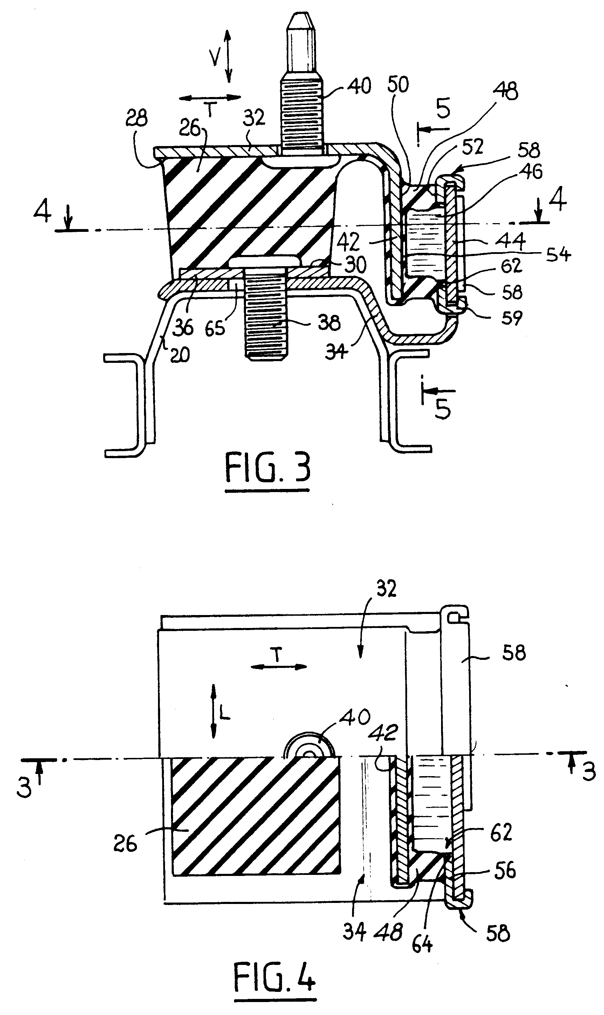

On décrira maintenant en détail un premier mode de réalisation d'une liaison élastique 24 tel qu'il est illustré aux figures 3 à 5.

D'une manière connue la liaison élastique comprend un bloc en matériau élastomère 26 s'étendant sensiblement selon la direction verticale V et dont les faces opposées 28 et 30 sont reliées, par adhérisation, à deux armatures principales opposées 32 et 34.

La face inférieure 30 du bloc 26 est reliée à l'armature principale inférieure 34 au moyen d'une armature intermédiaire plane 36 à laquelle il est adhérisé, cette dernière étant reliée à l'armature principale 34 proprement dite par serrage réciproque au moyen d'une vis de montage de la liaison 38 dont la tête est noyée dans le bloc 26 et qui traverse les armatures 36 et 34 pour permettre le montage de la liaison élastique sur une partie de traverse 20.

Les deux armatures principales opposées 32 et 34 sont des armatures métalliques planes parallèles s'étendant dans des plans perpendiculaires à la direction verticale V.

La liaison comporte également une seconde vis de montage 40 qui traverse l'armature principale supérieure 32 et s'étend selon la direction verticale dans le sens opposé à la vis 38 pour permettre la fixation de la liaison élastique sur la caisse 18 du véhicule.

L'armature principale supérieure 32 comporte une portion latérale plane 42 repliée à 90° qui s'étend dans un plan perpendiculaire à la direction transversale T en direction de l'armature inférieure 34.

D'une manière symétrique l'armature inférieure 34 comporte une portion latérale plane 44 repliée à 90° qui s'étend parallèlement à la portion 42 en vis à vis de cette dernière.

Les deux portions d'armature 42 et 44 définissent entre elles un espace dans lequel, conformément à l'invention, est agencée une chambre étanche déformable 46 remplie de liquide.

La chambre 46 est délimitée latéralement par une paroi latérale tubulaire cylindrique 48 dont la génératrice est parallèle à la direction transversale T. Du fait de son épaisseur "e", la paroi latérale tubulaire 48 possède deux faces annulaires d'extrémités opposées 50 et 52 qui sont chacune reliées de manière étanche à une portion d'armature, 42 et 44 respectivement.

La face d'extrémité 50 est complétée par une paroi mince d'extrémité 54, venue de matière avec la paroi latérale 48 qui est adhérisée sur la face en vis à vis de la portion d'armature 42.

La face d'extrémité annulaire 52 est reliée, par adhérisation, sur la face en vis à vis d'un cadre intermédiaire métallique 56.

Le cadre intermédiaire 56 possède un contour correspondant au contour rectangulaire de la face annulaire d'extrémité 52.

Le cadre intermédiaire 56 est muni, sur trois de ses côtés, d'un bord périphérique 58 qui est rabattu par sertissage sur le pourtour rectangulaire correspondant de la portion d'armature 44.

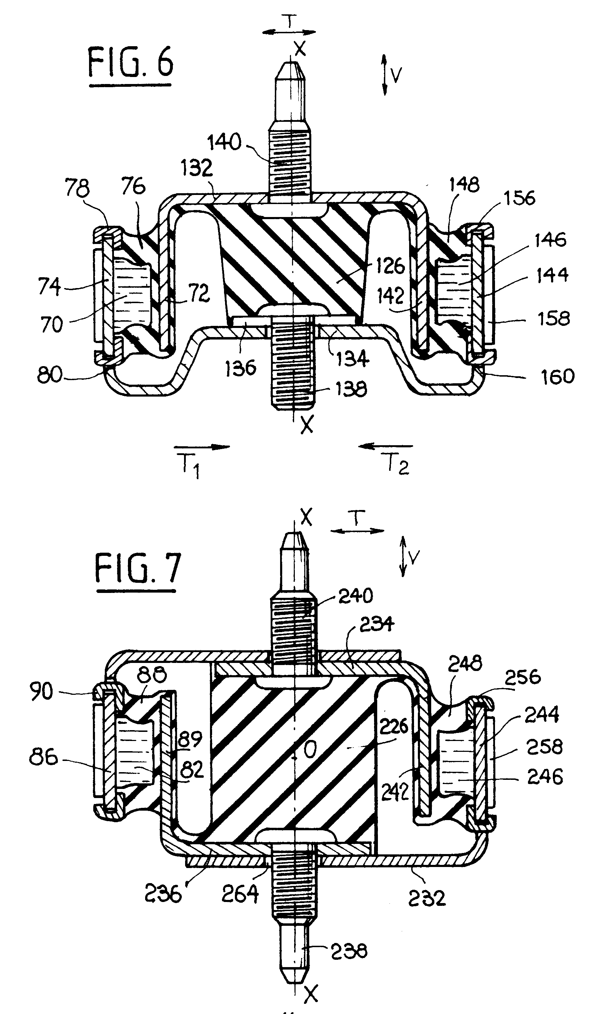

Le quatrième côté du cadre intermédiaire 56, c'est-à-dire le côté inférieur en considérant les figures 3 et 5, comporte également un bord périphérique 59, de longueur réduite, qui s'étend à travers une fente de montage 60 de la portion d'armature 44 et dont le bord libre est rabattu par sertissage sur la face en vis à vis de celle-ci.

Comme on peut le constater notamment aux figures 3 et 4, la paroi latérale tubulaire 48 comporte un bourrelet interne d'étanchéité 62, venu de matière avec la paroi latérale 48 au voisinage de sa face d'extrémité annulaire 52, qui coopère avec le bord interne 64 du cadre intermédiaire 56 et la face en vis à vis de la portion d'armature 44 pour assurer une liaison étanche entre le cadre 56 et la portion d'armature 44.

Conformément à l'invention on a ainsi délimité une chambre étanche déformable 46 qui, lors de la réalisation de la liaison élastique, doit être remplie entièrement d'un liquide.

Comme on peut le constater à la figure 3, le trou 65 formé dans l'armature principale inférieure 34 pour permettre le passage de la vis de montage 38 est un trou oblong qui permet le montage de l'armature inférieure 34 sur la portion de bord périphérique 59 du cadre 56, par inclinaison puis basculement, avant l'opération de sertissage.

Conformément à l'invention, la paroi latérale 48 présente, comme on peut le constater aux figures 3 et 4 un profil en forme de voûte dont la convexité est tournée vers l'intérieur de la chambre 46. Cette caractéristique, alliée à une épaisseur "e" importante, permet d'assurer une résistance maximale à l'accroissement de la pression à l'intérieur de la chambre 46 lorsque celle-ci est comprimée entre les deux portions d'armatures 42 et 44 lorsque les deux armatures principales 32 et 34 se déplacent l'une par rapport à l'autre parallèlement à la direction transversale T dans le sens correspondant à leur rapprochement c'est-à-dire lorsque l'armature principale 32 se déplace dans la direction T1 et/ou l'armature principale inférieure 34 se déplace dans la direction T2.

Pour assurer un remplissage complet de la chambre 46, l'opération d'assemblage de la liaison élastique, c'est-à-dire l'opération de sertissage du bord du cadre 56, est de préférence réalisée en immersion dans un bain du liquide prévu pour remplir la chambre 46 qui peut notamment être de l'eau additionnée d'un produit anti-gel.

Le bloc en matériau élastomère 26 et la paroi latérale 48 peuvent être réalisés par surmoulage sur l'armature supérieure principale 32 en une seule opération.

La liaison qui vient d'être décrite possède une raideur élastique transversale qui est sensiblement égale à 20 fois la raideur élastique de la liaison suivant la direction verticale V c'est-à-dire qui est due à la seule présence du bloc en matériau élastomère 26.

On comprend en effet aisément que dans le cas où les deux armatures principales 32 et 34 sont sollicitées, soit selon la direction verticale V, soit selon la direction longitudinale L, la chambre 46 et la paroi latérale 48, cette dernière travaillant "en cisaillement", n'ont aucun effet amplificateur sur la rigidité élastique de la liaison selon ces deux directions.

On décrira maintenant la variante de réalisation de la liaison élastique représentée à la figure 6. Les éléments identiques ou similaires à ceux de la liaison des figures 3 à 5 sont désignés par les mêmes chiffres de référence augmentés de 100.

La liaison élastique de la figure 6 comporte deux chambres 146 et 70 agencées symétriquement de part et d'autre de l'axe général X-X de la liaison élastique commun aux deux vis de fixation 138 et 140.

A cet effet la seconde chambre étanche 70, dont la structure est en tous points identique à celle de la première chambre 146, s'étend entre une seconde portion d'armature 72 de l'armature principale supérieure 132 et une seconde portion d'armature 74 de l'armature principale inférieure 134.

Les secondes portions d'armature 72 et 74 sont symétriques des portions d'armature 142 et 144 et s'étendent dans des plans parallèles à celles-ci et opposés par rapport à l'axe X-X.

La paroi latérale 76 de la seconde chambre 70 est également reliée à la portion d'armature 74 au moyen d'un cadre intermédiaire 78.

Les deux prolongements 142 et 72 de l'armature principale 132 s'étendent parallèlement vers le bas entre les deux prolongements 144 et 74 de l'armature principale inférieure 134.

Afin de réaliser l'assemblage de la liaison élastique de la figure 6 il est nécessaire de comprimer légèrement les deux cadres intermédiaires 156 et 78 respectivement dans les directions T2 et T1, afin de permettre leur introduction entre les deux portions d'armatures extérieures 144 et 74 jusqu'à ce que les bords inférieurs des cadres 156 et 78 pénètrent dans les fentes 160 et 80. Il ne reste plus ensuite qu'à procéder au sertissage des deux cadres.

Du fait de sa symétrie de conception par rapport à l'axe X-X, la liaison élastique de la figure 6 présente une raideur élastique égale suivant la direction T quel que soit le sens de déplacement relatif des deux armatures principales 132 et 134.

Le montage d'un train roulant de véhicule à l'aide de deux liaisons élastiques du type de celles représentées à la figure 6 permet d'accroître encore le guidage du train roulant.

On décrira maintenant la seconde variante de réalisation de la liaison élastique selon l'invention représentée à la figure 7. Les éléments identiques ou similaires à ceux de la figure 1 y sont désignés par les mêmes chiffres de référence augmentés de 200.

La liaison élastique représentée à la figure 7 comporte une symétrie de structure par rapport au centre 0 du bloc élastomère 226 situé sur l'axe X-X commun aux vis de montage 238 et 240.

L'armature supérieure principale 234 est complétée par une seconde armature supérieure principale 84 qui se prolonge par une portion d'armature 86 repliée à 90°.

De la même manière l'armature intermédiaire 236 se prolonge par une portion d'armature 89 repliée à 90° parallèle à la portion d'armature 86, ces deux dernières portions étant également parallèles aux portions d'armatures 242 et 244. La paroi latérale 88 délimitant la seconde chambre 82 est reliée de manière étanche au prolongement d'armature 86 par un cadre intermédiaire 90.

L'assemblage de cette liaison élastique se fait en comprimant légèrement les deux cadres 256 et 90 en direction de l'axe X-X afin qu'ils viennent s'insérer entre les portions d'armature en vis à vis 244 et 86.

Les deux chambres étanches 246 et 82 sont disposées entre les deux paires de prolongements alternés 244, 242, 89 et 86 (de la droite vers la gauche en considérant la figure 7) de manière à obtenir une rigidité élastique maximale de la liaison élastique selon la direction T.

Comme on peut le constater aux figures 6 et 7, les parois latérales des chambres étanches peuvent être venues de matière avec le bloc central en matériau élastomère et réalisées en une seule opération de surmoulage.

Dans le cas de la figure 7 l'armature principale supérieure complémentaire 84 et l'armature principale inférieure 232 sont solidarisées respectivement avec l'armature principale supérieure 234 et avec l'armature intermédiaire 236 lors du montage de la liaison sur le véhicule et par serrage des vis 238 et 240.

**Revendications**

1. Liaison élastique (24) du type comportant un bloc en matériau élastomère (26, 126, 226), deux armatures planes (32, 132, 232 - 34, 134, 234) et parallèles, susceptibles de se déplacer l'une par rapport à l'autre qui sont séparées axialement par le bloc en matériau élastomère (26, 126, 226) dont chacune des faces opposées (28, 30) est adhérisée à l'armature en vis-à-vis, caractérisée en ce qu'elle comporte au moins une chambre (46, 146, 246) fermée hermétiquement, remplie entièrement d'un liquide incompressible et qui est agencée entre deux portions (42, 142, 242 - 44, 144, 244) de chacune des deux armatures qui sont repliées à 90° en direction de l'armature opposée de manière à augmenter la raideur élastique de la liaison selon une direction (T) de déplacement relatif des armatures sensiblement perpendiculaire à un plan parallèlement auquel s'étendent les deux positions d'armature, une paroi latérale (48, 148, 248) de ladite chambre s'étendant entre lesdites deux portions des armatures et étant déformable sous l'effet dudit déplacement relatif des armatures.

2. Liaison élastique selon la revendication 1, caractérisée en ce que la chambre est délimitée par une paroi latérale tubulaire (48, 148, 248) en matériau élastomère dont chacune des faces d'extrémités annulaires opposées (50, 52) est reliée de manière étanche à la face de la portion d'armature (42, 44) en vis-à-vis.

3. Liaison élastique selon la revendication 2, caractérisée en ce que la paroi tubulaire est une paroi sensiblement cylindrique dont la génératrice est parallèle à la direction de déplacement.

4. Liaison élastique selon la revendication 3, caractérisée en ce que la courbe directrice de la paroi latérale cylindrique est un rectangle.

5. Liaison élastique selon l'une quelconque des revendications 2 à 4, caractérisée en ce que la chambre (46) est également délimitée par une paroi d'extrémité (54), venue de matière avec la paroi latérale (48), et adhérisée sur la face de la portion d'armature (42) en vis-à-vis.

6. Liaison élastique selon l'une quelconque des revendications 2 à 4, caractérisée en ce que l'une (52) desdites faces d'extrémité annulaires est adhérisée sur un cadre intermédiaire (56) de liaison dont le contour correspond sensiblement à celui de ladite face annulaire d'extrémité annulaire et qui comporte des moyens de liaison étanches (58) avec la portion d'armature (44) en vis-à-vis.

7. Liaison élastique selon la revendication 6, caractérisée en ce que lesdits moyens de liaison étanche sont constitués par un bord périphérique (58) du cadre intermédiaire (56) serti autour de ladite portion d'armature (44).

8. Liaison élastique selon la revendication 7, caractérisée en ce que lesdits moyens de liaison étanche comportent également un bourrelet interne (62) d'étanchéité, venu de matière avec la paroi latérale (48) au voisinage de ladite face d'extrémité annulaire (52), et qui coopère avec le bord interne du cadre intermédiaire et la face en vis-à-vis de la portion d'armature.

9. Liaison élastique selon l'une quelconque des revendications 2 à 8, caractérisée en ce que la paroi latérale présente, en section par un plan parallèle à ladite direction, un profil en forme de voûte dont la convexité est tournée vers l'intérieur de la chambre.

10. Liaison élastique selon l'une quelconque des revendications précédentes, caractérisée en ce qu'elle comporte une seconde chambre (70, 82) étanche déformable remplie d'un liquide et agencée entre deux autres portions (72 - 74 - 89, 86) de chacune des armatures qui s'étendent parallèlement à un plan perpendiculaire à ladite direction (T) de déplacement relatif des armatures.

11. Liaison élastique selon la revendication 10, caractérisée en ce que les deux portions parallèles (142, 72) d'une des deux armatures (32) s'étendent entre les deux portions parallèles (144, 74) de l'autre des deux armatures (34) de manière à augmenter la rigidité axiale de la liaison selon ladite direction de déplacement relatif dans les deux sens de déplacement (T1, T2).

12. Liaison élastique selon la revendication 11, caractérisée en ce que les deux portions parallèles (242, 86) d'une des deux armatures (234, 84) sont agencées de manière alternée par rapport aux deux portions parallèles (244, 89) de l'autre (232, 236) des deux armatures de manière à augmenter la rigidité axiale de la liaison selon ladite direction (T) de déplacement relatif dans un sens de déplacement.

**Patentansprüche**

1. Eine elastische Verbindung (24) von der Art, die einen Block aus Elastomermaterial (26, 126, 226) sowie zwei flache parallele Armaturen (32, 132, 232 -34, 134, 234) aufweist, die sich zueinander verschieben können und die in axialer Richtung durch den Block aus Elastomermaterial (26, 126, 226) voneinander getrennt sind, und deren jeweils entgegengesetzte Fläche (28, 30) an der gegenüberliegenden Armatur befestigt ist, **dadurch gekennzeichnet,** daß sie mindestens eine hermetisch verschlossene Kammer (46, 146, 246) aufweist, die vollkommen mit einer nicht komprimierbaren Flüssigkeit befüllt ist und die zwischen zwei beschnitten (42, 142, 242 - 44, 144, 244) jeder der beiden Armaturen angeordnet ist, die um 90° in Richtung der gegenüberliegenden Armatur geigen sind, um die elastische Steifigkeit der Verbindung in einer Richtung (T) der relativen Verschiebung der Armaturen weitgehend rechtwinklig zu einer parallelen Ebene zu erhöhen, zu der sich die beiden Armaturenabschnitte erstrecken, wobei eine Seitenwand (48, 148, 248) der sich zwischen den Armaturenabschnitten erstreckenden Kammer unter der Wirkung der relativen Verschiebung der Armaturen verformbar ist.

2. Eine elastische Verbindung nach Anspruch 1, **dadurch gekennzeichnet,** daß die Kammer durch eine rohrförmige Seitenwand (48, 148, 248) aus Elastomermaterial abgegrenzt wird, deren jeweilige gegenüberliegende ringförmige Endfläche (50, 52) leckdicht mit der Fläche des gegenüberliegenden Armaturenabschnitts (42, 44) verbunden ist.

3. Eine elastische Verbindung nach Anspruch 2, **dadurch gekennzeichnet,** daß die rohrförmige Wand eine weitgehend zylindrische Wand ist, deren Scheitellinie parallel zu der Verschiebungsrichtung verläuft.

4. Eine elastische Verbindung nach Anspruch 3, **dadurch gekennzeichnet,** daß die Bogenachse der zylindrischen Seitenwand ein Rechteck ist.

5. Eine elastische Verbindung nach einem der Ansprüche 2 bis 4, **dadurch gekennzeichnet,** daß die Kammer (46) ebenfalls durch eine Endwand (54) abgegrenzt wird, die an die Seitenwand (48) anschließt und an der Fläche des gegenüberliegenden Armaturenabschnittes (42) befestigt ist.

6. Eine elastische Verbindung nach einem der Ansprüche 2 bis 4, **dadurch gekennzeichnet,** daß eine (52) dieser ringförmigen Endflächen an einem Verbindungszwischenrahmen (56) befestigt ist, dessen Umriß weitgehend demjenigen der ringförmigen Endfläche entspricht und der leckdichte Mittel (58) für die Verbindung mit dem gegenüberliegenden Armaturenabschnitt (44) aufweist.

7. Ein elastische Verbindung nach Anspruch 6, **dadurch gekennzeichnet,** daß diese leckdichten Verbindungsmittel durch eine periphere Kante (58) des Zwischenrahmens (56) gebildet werden, die um den Armaturenabschnitt (44) eingepreßt ist.

8. Eine elastische Verbindung nach Anspruch 7, **dadurch gekennzeichnet,** daß die leckdichten Verbindungsmittel ebenfalls einen inneren Dichtwulst (62) aufweisen, der an der Seitenwand (48) in der nähe der ringförmigen Endfläche (52) anschließt und mit der Innenkante des Zwischenrahmens und der gegenüberliegenden Fläche des Armaturenabschnitts zusammenwirkt.

9. Eine elastische Verbindung nach einem der Ansprüche 2 bis 8
   **dadurch gekennzeichnet**, daß
   die Seitenwand im Querschnitt durch eine zu dieser Richtung parallel verlaufenden Ebene ein bogenförmiges Profil aufweist, dessen Wölbung in das Innere der Kammer gekehrt ist.

10. Ein elastische Verbindung nach einem der vorausgegangenen Ansprüche,
    **dadurch gekennzeichnet**, daß
    sie eine zweite verformbare leckdichte Kammer (70, 82) aufweist, die mit Flüssigkeit befüllt und zwischen zwei weiteren beschnitten (72 - 74 - 89, 86) jeder der Armaturen angeordnet ist, die sich parallel zu einer Ebene erstrecken, die rechtwinklig zur Richtung (T) der relativen Verschiebung der Armaturen verläuft.

11. Ein elastische Verbindung nach Anspruch 10,
    **dadurch gekennzeichnet**, daß
    sich die beiden parallelen beschnitte (142, 72) einer der beiden Armaturen (32) zwischen den beiden parallelen Abschnitten (144, 74) der anderen der beiden Armaturen (34) erstrecken, um die axiale Steifigkeit der Verbindung in der genannten Richtung der relativen Verschiebung in beiden Richtungen (T1, T2) der Verschiebung zu erhöhen.

12. Eine elastische Verbindung nach Anspruch 11,
    **dadurch gekennzeichnet**, daß
    die beiden parallelen beschnitte (242, 86) einer der beiden Armaturen (234, 84) alternierend zu den beiden parallelen beschnitten (244, 89) der anderen (232, 236) der beiden Armaturen angeordnet sind, um die axiale Steifigkeit der Verbindung in Richtung (T) der relativen Verschiebung in einer Verschiebungsrichtung zu erhöhen.

## Claims

1. A flexible joint (24) of the type comprising a block of elastomeric material (26, 126, 226), two flat and parallel armatures (32, 132, 232-34, 134, 234) capable of displacement relative to each other, which are axially separated by the elastomeric block (26, 126, 226), of which each opposite face (26, 30) is bonded to the opposed armature, characterized in that it defines at least one hermetically sealed chamber (46, 146, 246) completely filled with an incompressible liquid, and which is arranged between two portions (42, 142, 242 - 44, 144, 244) of each of the two armatures which are bent at 90° towards the opposite armature so as to increase the elastic stiffness of the joint along a direction (T) of the relative displacement of the armatures substantially perpendicular to a plane which is parallel to that in which the two armature portions extend, one lateral wall (48, 148, 248) of the said chamber extending between the said two portions of the armatures and being deformable under the effect of the said relative displacement of the armatures.

2. A flexible joint according to claim 1, characterized in that the chamber is delimited by a lateral tubular wall (48, 148, 248) of elastomeric material whereof each of the opposite annular end surfaces (50, 52) is connected in a leakproof manner to the opposed armature portion (42, 44).

3. A flexible joint according to claim 2, characterized in that the tubular wall is a substantially cylindrical wall whose generatrix is parallel to the direction of displacement.

4. A flexible joint according to claim 3, characterized in that the director curve of the cylindrical lateral wall is a rectangle.

5. A flexible joint according to any one of claims 2 to 4, characterized in that the chamber (46) is also delimited by an end wall (54) formed integrally with the lateral wall (48) and bonded to the opposed armature portion (42).

6. A flexible joint according to any one of claims 2 to 4, characterized in that one (52) of the said annular end faces is bonded to an intermediate connecting frame (56) whose contour substantially corresponds to that of the said annular end face and which comprises means (58) for a leakproof connection to the opposed armature portion (44).

7. A flexible joint according to claim 7, characterized in that the said leakproof connecting means are constituted by a peripheral edge (58) of the intermediate frame (56) crimped around the said armature portion (44).

8. A flexible joint according to claim 7, characterized in that the said leakproof connecting means likewise include an inner sealing bead (62) which is integral with the lateral wall (48) in the vicinity of the said annular end face (52), and which cooperates with the inner edge of the intermediate frame and the opposed face of the armature portion.

9. A flexible joint according to any one of claims 2 to 8, characterized in that the lateral wall has, in section in a plane parallel to the said direction, an arch-shaped profile whose convex side is turned towards the interior of the chamber.

10. A flexible joint according to any one of the preceding claims, characterized in that it includes a second leakproof deformable chamber (70, 82) filled with a liquid and arranged between two other portions (72 - 74 - 89, 86) of each of the armatures which extend parallel to a plane perpendicular to the said relative displacement direction (T) of the armatures.

11. A flexible joint according to claim 10, characterized in that the two parallel portions (142, 72) of one of the two armatures (32) extend between the two parallel portions (144, 74) of the other of the two armatures (34) so as to increase the axial stiffness of the joint along the said relative displacement direction in the two directions of displacement (T1, T2).

12. A flexible joint according to claim 11, characterized in that the two parallel portions (242, 86) of one of the two armatures 234, 84) are arranged in an alternating manner with respect to the two parallel portions (244, 89) of the other (232, 236) of the two armatures so as to increase the axial stiffness of the joint along the said relative displacement direction (T) in one direction of displacement.

FIG.1

FIG.2

FIG.5

9

FIG. 3

FIG.4

FIG. 6

FIG. 7

11